(19) Europäisches Patentamt / European Patent Office / Office européen des brevets

(11) **EP 3 745 425 B1**

(12) **EUROPEAN PATENT SPECIFICATION**

(45) Date of publication and mention of the grant of the patent:
**21.12.2022 Bulletin 2022/51**

(21) Application number: **20177223.3**

(22) Date of filing: **28.05.2020**

(51) International Patent Classification (IPC):
*H01B 7/18* (2006.01)  *H02G 1/12* (2006.01)

(52) Cooperative Patent Classification (CPC):
**H01B 7/02; H01B 7/38; H02G 1/12;** H01B 7/1825

(54) **COMMUNICATIONS CABLES FOR AUTONOMOUS VEHICLES**

KOMMUNIKATIONSKABEL FÜR AUTONOME FAHRZEUGE

CÂBLES DE COMMUNICATION POUR VÉHICULES AUTONOMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2019 US 201962855829 P**

(43) Date of publication of application:
**02.12.2020 Bulletin 2020/49**

(73) Proprietor: **Aptiv Technologies Limited St. Michael (BB)**

(72) Inventors:
• **WOESTE, Guido**
 **58332 Schwelm (DE)**
• **SCHÄFER, Christian**
 **44879 Bochum (DE)**
• **BÄUMER, Peter**
 **44879 Bochum (DE)**

(74) Representative: **Manitz Finsterwald Patent- und Rechtsanwaltspartnerschaft mbB Martin-Greif-Strasse 1 80336 München (DE)**

(56) References cited:
**CN-A- 102 723 135    DE-C1- 4 025 380 US-A1- 2008 128 151**

## Description

Field of the Invention

This description relates to a method for obtaining a communications cable.

Background

Autonomous vehicles can be used to transport people and/or cargo (e.g., packages, objects, or other items) from one location to another. As an example, an autonomous vehicle can navigate to the location of a person, wait for the person to board the autonomous vehicle, and traverse to a specified destination (e.g., a location selected by the person). As another example, an autonomous vehicle can navigate to the location of cargo, wait for the cargo to be loaded into the autonomous vehicle, and navigate to a specified destination (e.g., a delivery location for the cargo).

Autonomous vehicles can include one or more electronic components. Electrical signals can be transmitted to and/or from electronic components using electrically conductive cables or wires.

US 2008/128151 A1 discloses an electrical control cable including a plurality of strands extending in the longitudinal direction of the cable. The strands are twisted to form a stranded conductor. DE 40 25 380 C1 discloses a method and an apparatus for removing a heath of a wire. CN 102723135 A1 discloses a cable having a plurality of strands.

Summary

The invention is set out in the appended set of claims.

According to the invention, cutting the one or more additional strands while not cutting first, second, and third strands at the first position includes aligning a first cutting edge of a stripping tool at the first position based on the orientation.

In an embodiment, the first cutting edge is aligned such that the first cutting edge is parallel to a line extending through a center of the second strand and a center of the third strand at the first position.

In an embodiment, cutting the one or more additional strands while not cutting first, second, and third strands at the first position includes cutting at least some of the one or more additional strands using the first cutting edge of the stripping tool.

In an embodiment, cutting the one or more additional strands while not cutting first, second, and third strands at the first position includes cutting at least some of the one or more additional strands using a second cutting edge of the stripping tool, wherein the second cutting edge is parallel to the first cutting edge.

In an embodiment, the method includes cutting an insulative jacket of the communications cable at the first position.

In an embodiment, cutting the insulative jacket of the communications cable includes cutting at least a portion of the insulative jacket using one or more first protruding edges of the stripping tool, the one or more first protruding edges protruding from the first edge of the cutting tool.

In an embodiment, cutting the insulative jacket of the communications cable includes cutting at least a portion of the insulative jacket using one or more second protruding edges of the stripping tool, the one or more second protruding edges protruding from the second edge of the cutting tool.

In an embodiment, the one or more additional strands are cut substantially concurrently with one another.

In an embodiment, the insulative jacket is cut substantially concurrently with the one or more additional strands.

In an embodiment, the method includes inserting at least one of an exposed portion of the second strand or an exposed portion of the third strand into an electrical connector.

In an embodiment, the method includes inserting an exposed portion of the first strand into the electrical connector.

In an embodiment, the method includes installing the communications cable and the electrical connector in a communications system of an autonomous vehicle.

A communications cable having a particular arrangement of electrically conductive strands and electrically insulative strands facilitates communications in physically constrained environments. Compared to existing cable designs (e.g., twisted pair cables), the cable offers improvements such as a simplified stripping process, a simplified manufacturing process, reductions in cost, and improved electrical characteristics.

These and other aspects, features, and implementations will become apparent from the following descriptions, including the claims.

Brief Description of the Drawings

    FIG. 1 shows an example of an autonomous vehicle having autonomous capability.
    FIG. 2 illustrates a computer system.
    FIG. 3 shows an example architecture for an autonomous vehicle.
    FIG. 4 shows an example of inputs and outputs that may be used by a perception module.
    FIG. 5 shows a block diagram of the inputs and outputs of a control module.
    FIG. 6 shows a block diagram of the inputs, outputs, and components of a controller.
    FIGS. 7A and 7B show an example cable.

FIGS. 8A and 8B show example cables and cable connectors.

FIGS. 9A-9D show an example process of stripping a cable using a stripping tool.

Detailed Description

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

In the drawings, specific arrangements or orderings of schematic elements, such as those representing devices, modules, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship, or association between or among two or more other schematic elements, the absence of any such connecting elements is not meant to imply that no connection, relationship, or association can exist. In other words, some connections, relationships, or associations between elements are not shown in the drawings so as not to obscure the disclosure. In addition, for ease of illustration, a single connecting element is used to represent multiple connections, relationships or associations between elements. For example, where a connecting element represents a communication of signals, data, or instructions, it should be understood by those skilled in the art that such element represents one or multiple signal paths (e.g., a bus), as may be needed, to affect the communication.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

General Overview

Communications cables facilitate electrical interconnections between electronic components. As an example, a cable connector includes one or more discrete conductors (e.g., one or more strands of conductive materials), each configured to transmit respective electrical signals along its length (e.g., from a first electronic component electrically coupled to a first end of the conductor to a second electronic component electrically coupled to a second end of the conductor).

A communications cable has a particular arrangement of electrically conductive strands and electrically insulative strands to facilitate communications in physically constrained environments. For instance, the cable includes an electrically insulative strand (e.g., a strand made of plastic, rubber, fiber, etc., or combinations thereof), and two electrically conductive strands (e.g., strands made of copper, silver, gold, aluminum, carbon nanotubes, etc., or combinations thereof) on opposite sides of and adjacent to the central electrically insulative strand. Further, the communications cable includes additional electrically insulative strands adjacent to the central electrically insulative strand.

Compared to existing cable designs (e.g., twisted pair cables), the cable offers improvements such as a simplified stripping process (e.g., enabling the electrically conductive strands to be exposed and accessed more easily), a simplified manufacturing process (e.g., no winding and de-coiling is needed in between steps of the manufacturing process), reductions in cost (e.g., less material is used), and improved electrical characteristics (e.g., easier to maintain mechanical symmetry, thereby improving the dielectric characteristics and enabling higher data rate, speed, and/or frequency).

Hardware Overview

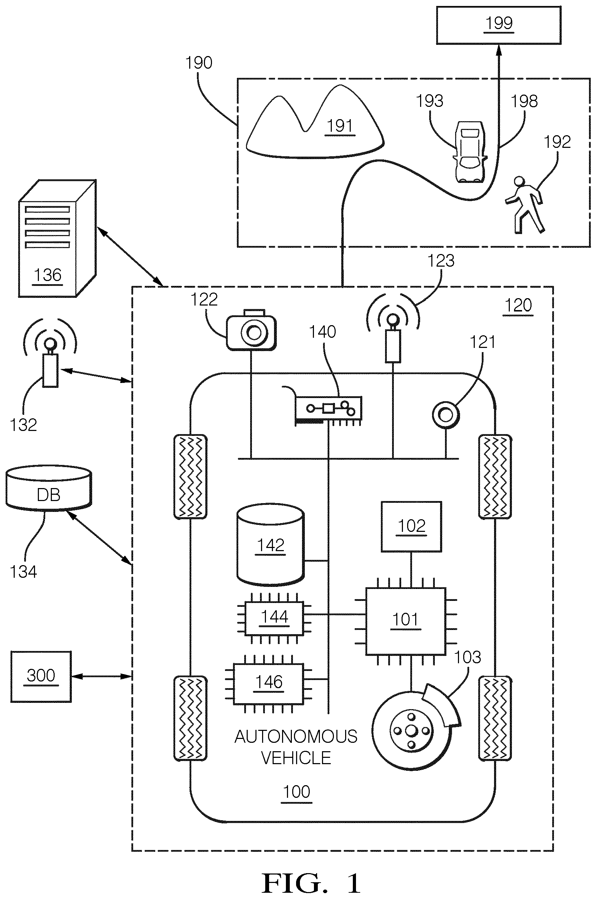

FIG. 1 shows an example of an autonomous vehicle 100 having autonomous capability.

As used herein, the term "autonomous capability" refers to a function, feature, or facility that enables a vehicle to be operated without real-time human intervention unless specifically requested by the vehicle.

As used herein, an autonomous vehicle (AV) is a vehicle that possesses autonomous capability.

As used herein, "vehicle" includes means of transposition of goods or people. For example, cars, buses, trains, airplanes, drones, trucks, boats, ships, submersibles, dirigibles, etc. A driverless car is an example of an AV.

As used herein, "trajectory" refers to a path or route generated by an AV to navigate from a first spatiotemporal location to second spatiotemporal location. In an embodiment, the first spatiotemporal location is referred to as the initial or starting location and the second spatiotemporal location is referred to as the destination, final location, goal, goal position, or goal location. In some examples, a trajectory is made up of one or more segments (e.g., sections of road) and each segment is made up of one or more blocks (e.g., portions of a lane or intersection). The spatiotemporal locations correspond to real world locations. For example, the spatiotemporal locations are pick up or drop-off locations to pick up or drop-off persons or goods.

As used herein, "sensor" includes one or more physical components that detect information about the environment surrounding the physical components. Some of the physical components can include electronic components such as analog-to-digital converters, a buffer (such as a RAM and/or a nonvolatile storage) as well as data processing components such as an ASIC (application-specific integrated circuit), a microprocessor and/or a microcontroller.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this description, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

As used herein, an AV system refers to the AV along with the array of hardware, software, stored data, and data generated in real-time that supports the operation of the AV. In an embodiment, the AV system is incorporated within the AV. In an embodiment, the AV system is spread across several locations. For example, some of the software of the AV system is implemented on a cloud computing environment (e.g., a system providing on-demand network access to a shared pool of configurable computing resources, such as networks, network bandwidth, servers, processing, memory, storage, applications, virtual machines, and services).

In general, this document describes technologies applicable to any vehicles that have one or more autonomous capabilities including fully autonomous vehicles, highly autonomous vehicles, and conditionally autonomous vehicles, such as so-called Level 5, Level 4 and Level 3 vehicles, respectively (see SAE International's standard J3016: Taxonomy and Definitions for Terms Related to On-Road Motor Vehicle Automated Driving Systems, which is incorporated by reference in its entirety, for more details on the classification of levels of autonomy in vehicles). The technologies descried in this document also are also applicable to partially autonomous vehicles and driver assisted vehicles, such as so-called Level 2 and Level 1 vehicles (see SAE International's standard J3016: Taxonomy and Definitions for Terms Related to On-Road Motor Vehicle Automated Driving Systems). In an embodiment, one or more of the Level 1, 2, 3, 4 and 5 vehicle systems may automate certain vehicle operations (e.g., steering, braking, and using maps) under certain operating conditions based on processing of sensor inputs. The technologies described in this document can benefit vehicles in any levels, ranging from fully autonomous vehicles to human-operated vehicles.

Referring to FIG. 1, an AV system 120 operates the AV 100 autonomously or semi-autonomously along a trajectory 198 through an environment 190 to a destination 199 (sometimes referred to as a final location) while avoiding objects (e.g., natural obstructions 191, vehicles 193, pedestrians 192, cyclists, and other obstacles) and obeying rules of the road (e.g., rules of operation or driving preferences).

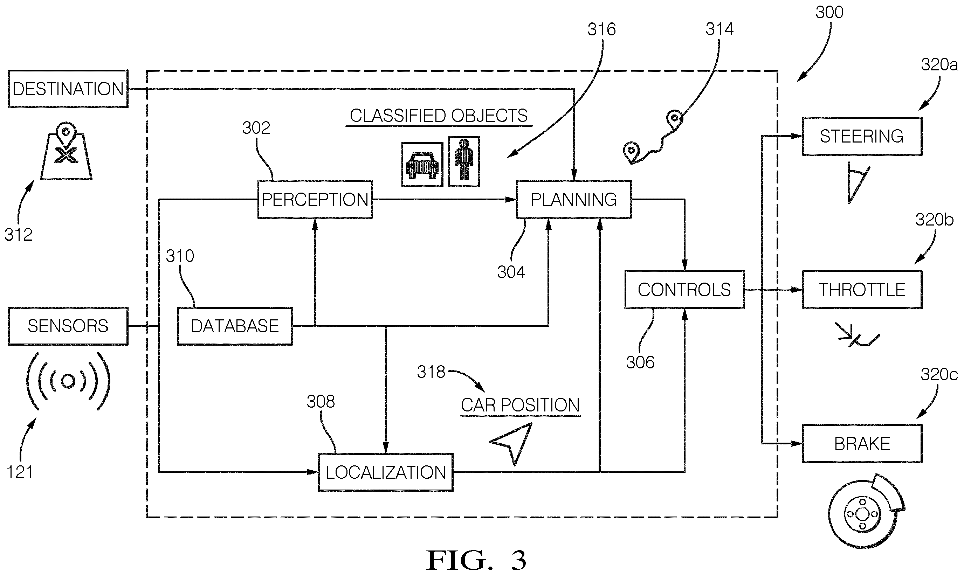

The AV system 120 includes devices 101 that are instrumented to receive and act on operational commands from the computer processors 146. Computing processors 146 are similar to the processor 204 described below in reference to FIG. 3. Examples of devices 101 include a steering control 102, brakes 103, gears, accelerator pedal or other acceleration control mechanisms, windshield wipers, side-door locks, window controls, and turn-indicators.

The AV system 120 includes sensors 121 for measuring or inferring properties of state or condition of the AV 100, such as the AV's position, linear and angular velocity and acceleration, and heading (e.g., an orientation of the leading end of AV 100). Example of sensors 121 are GPS, inertial measurement units (IMU) that measure both vehicle linear accelerations and angular rates, wheel speed sensors for measuring or estimating wheel slip ratios, wheel brake pressure or braking torque sensors, engine torque or wheel torque sensors, and steering angle and angular rate sensors.

The sensors 121 also include sensors for sensing or measuring properties of the AV's environment. For example, monocular or stereo video cameras 122 in the visible light, infrared or thermal (or both) spectra, LiDAR 123, radar, ultrasonic sensors, time-of-flight (TOF) depth sensors, speed sensors, temperature sensors, humidity sensors, and precipitation sensors.

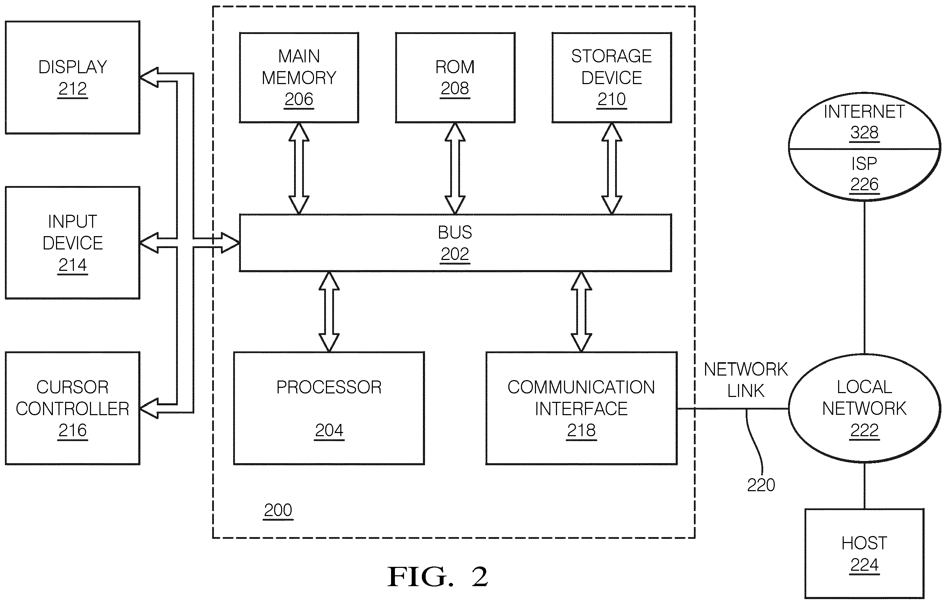

The AV system 120 includes a data storage unit 142 and memory 144 for storing machine instructions associated with computer processors 146 or data collected by sensors 121. The data storage unit 142 is similar to the ROM 208 or storage device 210 described below in relation to FIG. 2. Memory 144 is similar to the main memory 206 described below. The data storage unit 142 and memory 144 store historical, real-time, and/or predictive information about the environment 190. The stored information includes maps, driving performance, traffic congestion updates or weather conditions. Data relating to the environment 190 is transmitted to the AV 100 via a communications channel from a remotely located database 134.

The AV system 120 includes communications devices 140 for communicating measured or inferred properties of other vehicles' states and conditions, such as positions, linear and angular velocities, linear and angular accelerations, and linear and angular headings to the AV 100. These devices include Vehicle-to-Vehicle (V2V) and Vehicle-to- Infrastructure (V2I) communication devices and devices for wireless communications over point- to-point or ad hoc networks or both. In an embodiment, the communications devices 140 communicate across the electromagnetic spectrum (including radio and optical communications) or other media (e.g., air and acoustic media). A combination of Vehicle-to-Vehicle (V2V) Vehicle-to-Infrastructure (V2I) communication (and, in some embodiments, one or more other types of communication) is sometimes referred to as Vehicle-to-Everything (V2X) communication. V2X communication typically conforms to one or more communications standards for communication with, between, and among autonomous vehicles.

The communication devices 140 include communication interfaces. For example, wired, wireless, WiMAX, Wi-Fi, Bluetooth, satellite, cellular, optical, near field, infrared, or radio interfaces. The communication interfaces transmit data from a remotely located database 134 to AV system 120. The remotely located database 134 is embedded in a cloud computing environment. The communication interfaces 140 transmit data collected from sensors 121 or other data related to the operation of AV 100 to the remotely located database 134. In an embodiment, communication interfaces 140 transmit information that relates to teleoperations to the AV 100. In some embodiments, the AV 100 communicates with other remote (e.g., "cloud") servers 136.

The remotely located database 134 also stores and transmits digital data (e.g., storing data such as road and street locations). Such data is stored on the memory 144 on the AV 100, or transmitted to the AV 100 via a communications channel from the remotely located database 134.

The remotely located database 134 stores and transmits historical information about driving properties (e.g., speed and acceleration profiles) of vehicles that have previously traveled along trajectory 198 at similar times of day. In one implementation, such data may be stored on the memory 144 on the AV 100, or transmitted to the AV 100 via a communications channel from the remotely located database 134.

Computing devices 146 located on the AV 100 algorithmically generate control actions based on both real-time sensor data and prior information, allowing the AV system 120 to execute its autonomous driving capabilities.

The AV system 120 includes computer peripherals 132 coupled to computing devices 146 for providing information and alerts to, and receiving input from, a user (e.g., an occupant or a remote user) of the AV 100. Peripherals 132 are similar to the display 212, input device 214, and cursor controller 216 discussed below in reference to FIG. 2. The coupling is wireless or wired. Any two or more of the interface devices may be integrated into a single device.

FIG. 2 illustrates a computer system 200. In an implementation, the computer system 200 is a special purpose computing device. The special-purpose computing device is hard-wired to perform the techniques or includes digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. In various embodiments, the special-purpose computing devices are desktop computer systems, portable computer systems, handheld devices, network devices or any other device that incorporates hard-wired and/or program logic to implement the techniques.

The computer system 200 includes a bus 202 or other communication mechanism for communicating information, and a hardware processor 204 coupled with a bus 202 for processing information. The hardware processor 204 is, for example, a general-purpose microprocessor. The computer system 200 also includes a main memory 206, such as a random-access memory (RAM) or other dynamic storage device, coupled to the bus 202 for storing information and instructions to be executed by processor 204. In one implementation, the main memory 206 is used for storing temporary variables or other intermediate information during execution of instructions to be executed by the processor 204. Such instructions, when stored in non-transitory storage media accessible to the processor 204, render the computer system 200 into a special-purpose machine that is customized to perform the operations specified in the instructions.

The computer system 200 further includes a read only memory (ROM) 208 or other static storage device coupled to the bus 202 for storing static information and instructions for the processor 204. A storage device 210, such as a magnetic disk, optical disk, solid-state drive, or three-dimensional cross point memory is provided and coupled to the bus 202 for storing information and instructions.

The computer system 200 is coupled via the bus 202 to a display 212, such as a cathode ray tube (CRT), a liquid crystal display (LCD), plasma display, light emitting diode (LED) display, or an organic light emitting diode (OLED) display for displaying information to a computer user. An input device 214, including alphanumeric and other keys, is coupled to bus 202 for communicating information and command selections to the processor 204. Another type of user input device is a cursor controller 216, such as a mouse, a trackball, a touch- enabled display, or cursor direction keys for communicating direction information and command selections to the processor 204 and for controlling cursor movement on the display 212. This input device typically has two degrees of freedom in two axes, a first axis (e.g., x-axis) and a second axis (e.g., y-axis), that allows the device to specify positions in a plane.

The techniques herein are performed by the computer system 200 in response to the processor 204 executing one or more sequences of one or more instructions contained in the main memory 206. Such instructions are read into the main memory 206 from another storage medium, such as the storage device 210. Execution of the sequences of instructions contained in the main memory 206 causes the processor 204 to perform the process steps described herein. In alternative embodiments, hard-wired circuitry is used in place of or in combination with software instructions.

The term "storage media" as used herein refers to any non-transitory media that store data and/or instructions that cause a machine to operate in a specific fashion. Such storage media includes non-volatile media and/or volatile media. Non-volatile media includes, for example, optical disks, magnetic disks, solid-state drives, or three-dimensional cross point memory, such as the storage device 210. Volatile media includes dynamic memory, such as the main memory 206. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NV-RAM, or any other memory chip or cartridge.

Storage media is distinct from but may be used in conjunction with transmission media. Transmission media participates in transferring information between storage media. For example, transmission media includes coaxial cables, copper wire and fiber optics, including the wires that comprise the bus 202. Transmission media can also take the form of acoustic or light waves, such as those generated during radio-wave and infrared data communications.

Various forms of media are involved in carrying one or more sequences of one or more instructions to the processor 204 for execution. For example, the instructions are initially carried on a magnetic disk or solid-state drive of a remote computer. The remote computer loads the instructions into its dynamic memory and send the instructions over a telephone line using a modem. A modem local to the computer system 200 receives the data on the telephone line and use an infrared transmitter to convert the data to an infrared signal. An infrared detector receives the data carried in the infrared signal and appropriate circuitry places the data on the bus 202. The bus 202 carries the data to the main memory 206, from which processor 204 retrieves and executes the instructions. The instructions received by the main memory 206 may optionally be stored on the storage device 210 either before or after execution by processor 204.

The computer system 200 also includes a communication interface 218 coupled to the bus 202. The communication interface 218 provides a two-way data communication coupling to a network link 220 that is connected to a local network 222. For example, the communication interface 218 is an integrated service digital network (ISDN) card, cable modem, satellite modem, or a modem to provide a data communication connection to a corresponding type of telephone line. As another example, the communication interface 218 is a local area network (LAN) card to provide a data communication connection to a compatible LAN. In some implementations, wireless links are also implemented. In any such implementation, the communication interface 218 sends and receives electrical, electromagnetic, or optical signals that carry digital data streams representing various types of information.

The network link 220 typically provides data communication through one or more networks to other data devices. For example, the network link 220 provides a connection through the local network 222 to a host computer 224 or to a cloud data center or equipment operated by an Internet Service Provider (ISP) 226. The ISP 226 in turn provides data communication services through the world-wide packet data communication network now commonly referred to as the "Internet" 228. The local network 222 and Internet 228 both use electrical, electromagnetic or optical signals that carry digital data streams. The signals through the various networks and the signals on the network link 220 and through the communication interface 218, which carry the digital data to and from the computer system 200, are example forms of transmission media. The network 220 contains one or more cloud computing systems.

The computer system 200 sends messages and receives data, including program code, through the network(s), the network link 220, and the communication interface 218. The computer system 200 receives code for processing. The received code is executed by the processor 204 as it is received, and/or stored in storage device 210, or other non- volatile storage for later execution.

Autonomous Vehicle Architecture

FIG. 3 shows an example architecture 300 for an autonomous vehicle (e.g., the AV 100 shown in FIG. 1). The architecture 300 includes a perception module 302 (sometimes referred to as a perception circuit), a planning module 304 (sometimes referred to as a planning circuit), a control module 306 (sometimes referred to as a control circuit), a localization module 308 (sometimes referred to as a localization circuit), and a database module 310 (sometimes referred to as a database circuit). Each module plays a role in the operation of the AV 100. Together, the modules 302, 304, 306, 308, and 310 may be part of the AV system 120 shown in FIG. 1. In some embodiments, any of the modules 302, 304, 306, 308, and 310 is a combination of computer software and computer hardware.

In use, the planning module 304 receives data representing a destination 312 and determines data representing a trajectory 314 (sometimes referred to as a route) that can be traveled by the AV 100 to reach (e.g., arrive at) the destination 312. In order for the planning module 304 to determine the data representing the trajectory 314, the planning module 304 receives data from the perception module 02, the localization module 308, and the database module 310.

The perception module 302 identifies nearby physical objects using one or more sensors 121, e.g., as also shown in FIG. 1. The objects are classified (e.g., grouped into types such as pedestrian, bicycle, automobile, traffic sign, etc.) and data representing the classified objects 316 is provided to the planning module 304.

The planning module 303 also receives data representing the AV position 318 from the localization module 308. The localization module 308 determines the AV position by using data from the sensors 121 and data from the database module 310 (e.g., a geographic data) to calculate a position. For example, the localization module 308 uses data from a GNSS (Global Navigation Satellite System) sensor and geographic data to calculate a longitude and latitude of the AV. In an embodiment, data used by the localization module 308 includes high-precision maps of the roadway geometric properties, maps describing road network connectivity properties, maps describing roadway physical properties (such as traffic speed, traffic volume, the number of vehicular and cyclist traffic lanes, lane width, lane traffic directions, or lane marker types and locations, or combinations of them), and maps describing the spatial locations of road features such as crosswalks, traffic signs or other travel signals of various types.

The control module 306 receives the data representing the trajectory 314 and the data representing the AV position 318 and operates the control functions 320a-c (e.g., steering, throttling, braking, ignition) of the AV in a manner that will cause the AV 100 to travel the trajectory 314 to the destination 312. For example, if the trajectory 314 includes a left turn, the control module 306 will operate the control functions 320a-c in a manner such that the steering angle of the steering function will cause the AV 100 to turn left and the throttling and braking will cause the AV 100 to pause and wait for passing pedestrians or vehicles before the turn is made.

Autonomous Vehicle Inputs

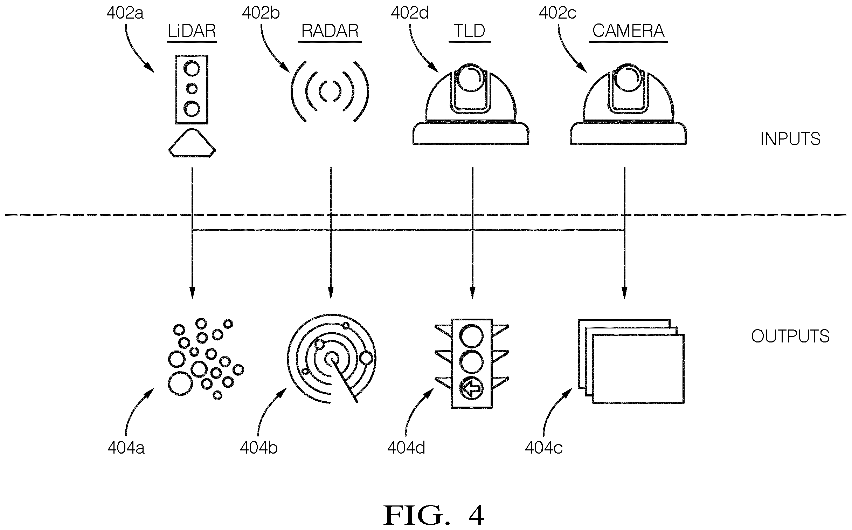

FIG. 4 shows an example of inputs 402a-d (e.g., sensors 121 shown in FIG. 1) and outputs 404a-d (e.g., sensor data) that is used by the perception module 302 (FIG. 3). One input 402a is a LiDAR (Light Detection And Ranging) system (e.g., LiDAR 123 shown in FIG. 1). LiDAR is a technology that uses light (e.g., bursts of light such as infrared light) to obtain data about physical objects in its line of sight. A LiDAR system produces LiDAR data as output 404a. For example, LiDAR data is collections of 3D or 2D points (also known as a point clouds) that are used to construct a representation of the environment 190.

Another input 402b is a radar system. Radar is a technology that uses radio waves to obtain data about nearby physical objects. Radars can obtain data about objects not within the line of sight of a LiDAR system. A radar system 402b produces radar data as output 404b. For example, radar data are one or more radio frequency electromagnetic signals that are used to construct a representation of the environment 190.

Another input 402c is a camera system. A camera system uses one or more cameras (e.g., digital cameras using a light sensor such as a charge-coupled device [CCD]) to obtain information about nearby physical objects. A camera system produces camera data as output 404c. Camera data often takes the form of image data (e.g., data in an image data format such as RAW, JPEG, PNG, etc.). In some examples, the camera system has multiple independent cameras, e.g., for the purpose of stereopsis (stereo vision), which enables the camera system to perceive depth. Although the objects perceived by the camera system are described here as "nearby," this is relative to the AV. In use, the camera system may be configured to "see" objects far, e.g., up to a kilometer or more ahead of the AV. Accordingly, the camera system may have features such as sensors and lenses that are optimized for perceiving objects that are far away.

Another input 402d is a traffic light detection (TLD) system. A TLD system uses one or more cameras to obtain information about traffic lights, street signs, and other physical objects that provide visual navigation information. A TLD system produces TLD data as output 404d. TLD data often takes the form of image data (e.g., data in an image data format such as RAW, JPEG, PNG, etc.). A TLD system differs from a system incorporating a camera in that a TLD system uses a camera with a wide field of view (e.g., using a wide-angle lens or a fisheye lens) in order to obtain information about as many physical objects providing visual navigation information as possible, so that the AV 100 has access to all relevant navigation information provided by these objects. For example, the viewing angle of the TLD system may be about 120 degrees or more.

Outputs 404a-d are combined using a sensor fusion technique. Thus, either the individual outputs 504a-d are provided to other systems of the AV 100 (e.g., provided to a planning module 304 as shown in FIG. 3), or the combined output can be provided to the other systems, either in the form of a single combined output or multiple combined outputs of the same type (e.g., using the same combination technique or combining the same outputs or both) or different types type (e.g., using different respective combination techniques or combining different respective outputs or both). In some embodiments, an early fusion technique is used. An early fusion technique is characterized by combining outputs before one or more data processing steps are applied to the combined output. In some embodiments, a late fusion technique is used. A late fusion technique is characterized by combining outputs after one or more data processing steps are applied to the individual outputs.

Autonomous Vehicle Control

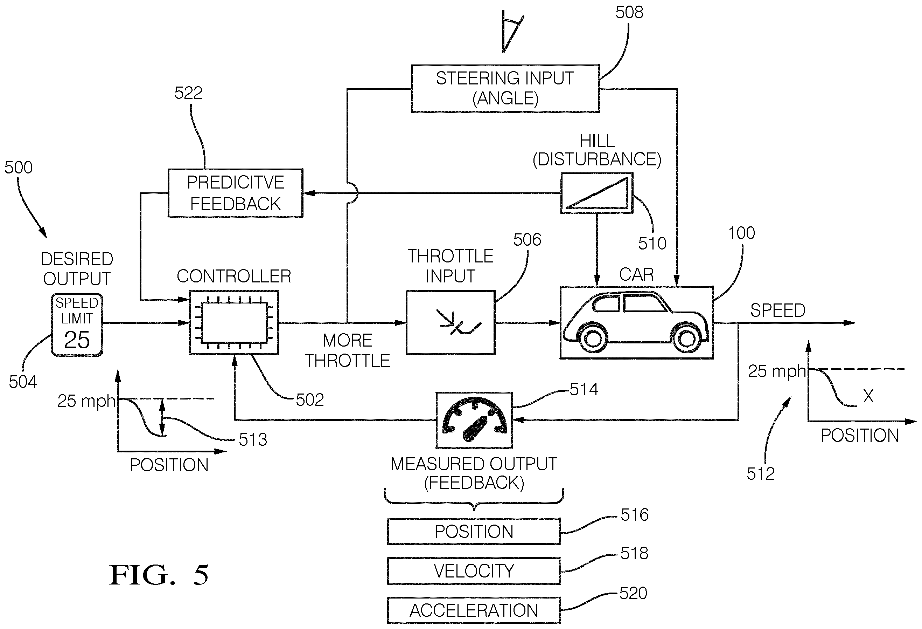

FIG. 5 shows a block diagram 500 of the inputs and outputs of a control module 306 (e.g., as shown in FIG. 3). A control module operates in accordance with a controller 502 which includes, for example, one or more processors (e.g., one or more computer processors such as microprocessors or microcontrollers or both) similar to processor 204, short-term and/or long-term data storage (e.g., memory random-access memory or flash memory or both) similar to main memory 206, ROM 208, and storage device 210, and instructions stored in memory that carry out operations of the controller 502 when the instructions are executed (e.g., by the one or more processors).

The controller 502 receives data representing a desired output 504. The desired output 504 typically includes a velocity, e.g., a speed and a heading. The desired output 504 can be based on, for example, data received from a planning module 304 (e.g., as shown in FIG. 3). In accordance with the desired output 504, the controller 502 produces data usable as a throttle input 506 and a steering input 508. The throttle input 506 represents the magnitude in which to engage the throttle (e.g., acceleration control) of an AV 100, e.g., by engaging the steering pedal, or engaging another throttle control, to achieve the desired output 504. In some examples, the throttle input 506 also includes data usable to engage the brake (e.g., deceleration control) of the AV 100. The steering input 508 represents a steering angle, e.g., the angle at which the steering control (e.g., steering wheel, steering angle actuator, or other functionality for controlling steering angle) of the AV should be positioned to achieve the desired output 504.

The controller 502 receives feedback that is used in adjusting the inputs provided to the throttle and steering. For example, if the AV 100 encounters a disturbance 510, such as a hill, the measured speed 512 of the AV 100 is lowered below the desired output speed. In an embodiment, any measured output 514 is provided to the controller 502 so that the necessary adjustments are performed, e.g., based on the differential 513 between the measured speed and desired output. The measured output 514 includes measured position 516, measured velocity 518, (including speed and heading), measured acceleration 520, and other outputs measurable by sensors of the AV 100.

Information about the disturbance 510 is detected in advance, e.g., by a sensor such as a camera or LiDAR sensor, and provided to a predictive feedback module 522. The predictive feedback module 522 then provides information to the controller 502 that the controller 502 can use to adjust accordingly. For example, if the sensors of the AV 100 detect ("see") a hill, this information can be used by the controller 502 to prepare to engage the throttle at the appropriate time to avoid significant deceleration.

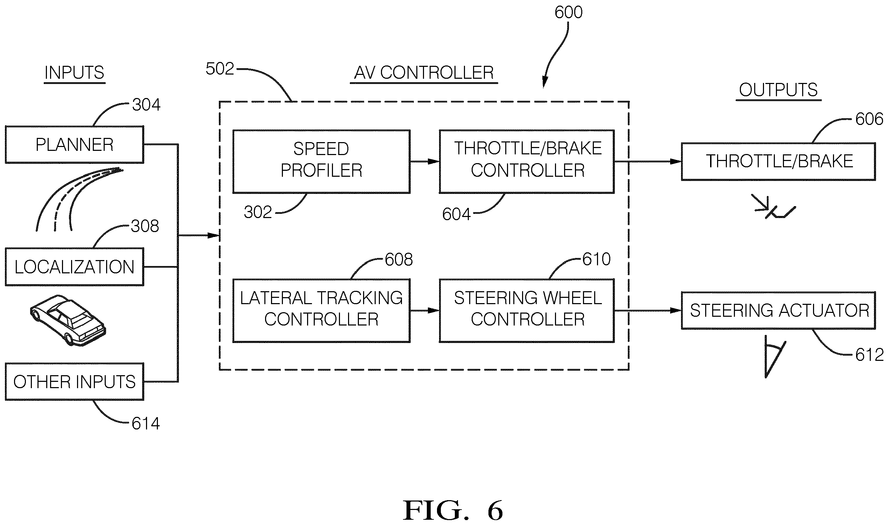

FIG. 6 shows a block diagram 600 of the inputs, outputs, and components of the controller 502. The controller 502 has a speed profiler 602 which affects the operation of a throttle/brake controller 604. For example, the speed profiler 602 instructs the throttle/brake controller 604 to engage acceleration or engage deceleration using the throttle/brake 606 depending on, e.g., feedback received by the controller 502 and processed by the speed profiler 602.

The controller 502 also has a lateral tracking controller 608 which affects the operation of a steering controller 610. For example, the lateral tracking controller 608 instructs the steering controller 610 to adjust the position of the steering angle actuator 612 depending on, e.g., feedback received by the controller 502 and processed by the lateral tracking controller 608.

The controller 502 receives several inputs used to determine how to control the throttle/brake 606 and steering angle actuator 612. A planning module 304 provides information used by the controller 502, for example, to choose a heading when the AV 100 begins operation and to determine which road segment to traverse when the AV 100 reaches an intersection. A localization module 308 provides information to the controller 502 describing the current location of the AV 100, for example, so that the controller 502 can determine if the AV 100 is at a location expected based on the manner in which the throttle/brake 606 and steering angle actuator 612 are being controlled. The controller 502 receives information from other inputs 614, e.g., information received from databases, computer networks, etc.

Remotely Monitoring and Controlling the Operation of Autonomous Vehicles

In some applications, a computer system controls the operation of one or more autonomous vehicles (e.g., a fleet of autonomous vehicles). For example, a computer system can deploy autonomous vehicles to one or more locations or regions, assign transportation tasks to each of the autonomous vehicles (e.g., pick up and transport passengers, pick up and transport cargo, etc.), provide navigation instructions to each of the autonomous vehicles (e.g., provide a route or path between two locations, provide instructions to traverse objects in proximity to the autonomous vehicle, etc.), assign maintenance tasks to each of the autonomous vehicles (e.g., charge their batteries at charging stations, receive repairs at a service station, etc.), and/or assign other tasks to each of the autonomous vehicles.

Further, a computer system can be used the monitor the operation of autonomous vehicles. For example, a computer system can collect information from each of the autonomous vehicles (e.g., vehicle telemetry data, such as data regarding a vehicle's speed, heading, status, or other aspects of a vehicle's operation), process the collected information, and present the information to one or more users (e.g., in the form of an interactive graphical user interface) such that the users can keep informed regarding the operation of the autonomous vehicles.

Electrical Interconnections Between Components of an Autonomous Vehicle

Electrical signals are transmitted to and/or from electronic components of the AV 100 using electrically conductive cables or wires. As an example, a cable carries electrical signals from one electronic component to another to facilitate the transmission of data, instructions, or other information between the electronic components. As another example, a cable carries electrical power from a power source to an electronic component to support the operation of the electronic component. In some embodiments, one or more cables are used to interconnect some or all of the electronic components shown in FIGS. 1-6 to facilitate performance of the functions described herein.

A single cable facilitates multiple interconnections concurrently. As an example, a single cable includes multiple discrete conductors (e.g., electrically conductive wires or strands) and transmits, for each conductor, electrical signals from one electronic component to another. This is beneficial, for instance, in simplifying the process of assembling and/or maintaining an electrical system, reducing the physical space needed to implement the electrical system, and/or increasing a data throughput or capacity of the electrical system. The electrical signals transmitted through two conductors in a cable can be equal and opposite to one another (e.g., using differential signaling, such as to improve electromagnetic compatibility within an electrical system).

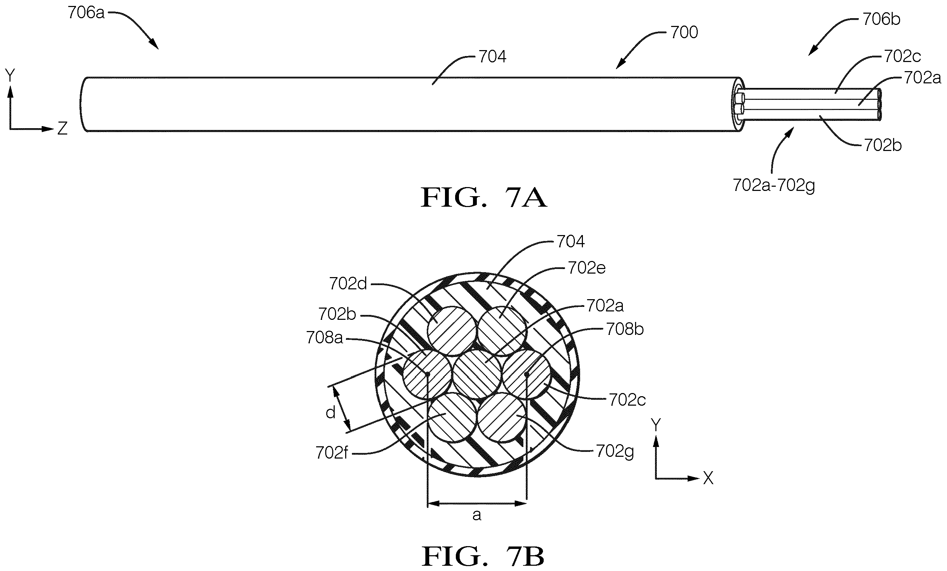

FIGS. 7A and 7B show an example cable 700 according to a side view and a cross-sectional view, respectively. The cable 700 includes a bundle of strands 702a-702g extending along a length of the cable 700, and an insulative jacket 704 that at least partially encloses the bundle of strands. In the example shown in FIG. 7A, a first portion 706a of the bundle of strands is fully enclosed by the insulative jacket 704 with respect to its cross-section, and a second portion 706b of the bundle of strands is not enclosed by the insulative jacket 704 with respect to its cross-section (e.g., "exposed" or "stripped"). In some implementations, some of the strands 702a-702g are longer than the other strands along the second portion 706b (e.g., as shown in FIG. 7A, the strands 702a-702c are longer than the other strands).

As shown in FIG. 7B, the bundle of strands 702a-702g are arranged such that adjacent strands of the bundle contact or nearly contact one another along their lengths. The bundle of strands includes a central insulative strand 702a, and two electrically conductive strands 702b and 702c positioned on opposing sides of the central insulative strand 702a with respect to its cross-section. Further, the bundle of strands includes additional insulative strands 702d-702g positioned along the periphery of the central insulative strand 702a with respect to its cross-section.

Each of the electrically conductive strands 702b and 702c facilitates electrical interconnection between respective electronic components. For example, the electrically conductive strand 702b transmits first electrical signals between two electronic components, and the electrically conductive strand 702c transmits second electrical signals between two electronic components (e.g., either between the same electronic component as with the first conductive strand 702b, or between one or more different electronic components). The electrically conductive strands 702b and 702c each transmit electrical signals that are independent from one another. In another embodiment, the electrically conductive strands 702b and 702c transmit equal and opposite electrical signals (e.g., using differential signaling, such as to improve electromagnetic compatibility within an electrical system). The electrically conductive strands 702b and 702c are composed of one or more electrically conductive materials, such as copper, silver, gold aluminum, carbon nanotubes, and/or other electrically conductive materials.

The central insulative strand 702a and the additional insulative strands 702e-702g physically separate and at least partially electrically isolate the electrically conductive strands 702b and 702c from one another. For example, the central insulative strand 702a and the additional insulative strands 702e-702g are positioned such that the electrically conductive strands 702band 702c do not directly contact each along other their lengths. The additional insulative strands 702d and 702e are positioned adjacent to the central insulative strand 702a on one side of the central insulative strand 702a, and the additional insulative strands 702f and 702g are positioned adjacent to the central insulative strand 702a on the opposing side of the central insulative strand 702a. The central insulative strand 702a and the additional insulative strands 702e-702g are composed of one or more electrically insulative materials, such as plastic, rubber, fiber, and/or other electrically insulative materials.

The bundle of strands 702a-702g extend in a substantially straight path along the length of the cable 700.

The bundle of strands 702a-702g twist along the length of the cable 700 (e.g., periodically). In practice, the degree to which the strands twist varies depending on the implementation. The twist rate of the strands is approximately 10 mm per twist (e.g., the strands exhibit one complete twist for every 10 mm of length along the cable 700). In another embodiment, the twist rate of the strands is between approximately 10 mm per twist and 20 mm per twist. Other twist rates are also possible, depending on the implementation.

In an embodiment, some or all of the strands 702a-702g have the same or substantially the same physical dimensions. In an embodiment, some or all of the strands have circular cross-sections, and have the same or substantially the same diameter $d$.

The central axes 708a and 708b of the electrically conductive strands 702b are 702c, respectively, are separated from one another by a distance $\alpha$ with respect to the cross-section of the cable 700, where $\alpha = 2 * d$.

In practice, the diameter d and/or the twist rate varies, depending on the implementation. The diameter d and/or the twist rate is selected such that the cable 700 exhibits particular electrical characteristics. For instance, the impedance of the cable 700 (e.g., twisted pair line impedance of the electrically conductive strands 702b and 702c) depends, at least in part, on the diameter $d$ (and in turn, the distance $\alpha$ between the central axes of the electrically conductive strands 70b and 702c) and the twist rate of the cable 700. Accordingly, a particular impedance of the cable 700 can be achieved by selecting an appropriate diameter $d$ and twist rate. The diameter $d$ and the twist rate are selected such that the line impedance of the cable 700 corresponds to a particular termination resistance (e.g., approximately 90 ohms to 110 ohms). This is beneficial, for example, in eliminating or otherwise reducing the reflection of signals at the end of the cable 700 during use.

A differential impedance $Z_d$ between the electrically conductive strands 702b and 702c can be approximated by the relationship:

$$Z_d = \frac{120}{\sqrt{\varepsilon_R}} \ln \frac{2a}{d'}$$

where $\varepsilon_R$ is the relative dielectric permittivity (dimensionless number), $\varepsilon_R = (c/v)^2$, $c$ is the speed of light in m/s, and $v$ is the transmission velocity of the cable in m/s. In an embodiment, $\varepsilon_R$ can be approximately 3.0. In embodiments where $a = 2 * d$, this relationship can be simplified as:

$$Z_d = \frac{120}{\sqrt{\varepsilon_R}} \ln(4).$$

In an embodiment (e.g., as shown in FIG. 7A), a portion of the insulative jacket 704 is removed from the cable 700 to expose some or all of the strands 702a-702g (e.g., "stripping" the cable 700). This is beneficial, for example, as it enables the electrically conductive strands of the cable 700 to be secured to other components (e.g., electronic components) more easily. Further, in an embodiment (e.g., as shown in FIG. 7A), when the cable 700 is stripped, some of the strands (e.g., the electrically conductive strands 702b and 702c, and the central insulative strand 702a) are longer than the other strands (e.g., the additional insulative strands 702d-702g). This is beneficial, for example, as it enables the electrically conductive strands to be coupled securely to certain types of cable connectors.

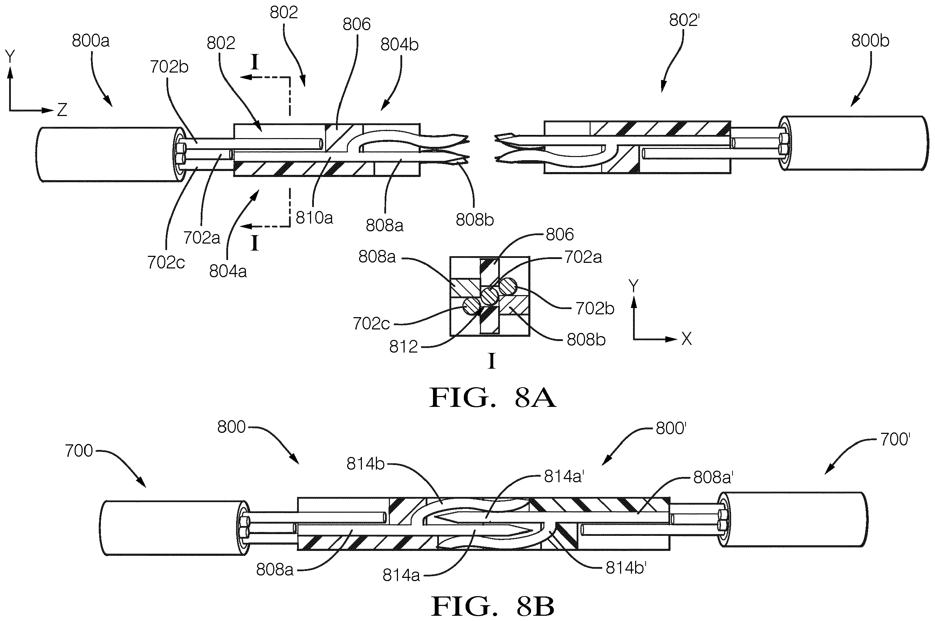

For example, FIG. 8A shows two cables 700 and 700' coupled to cable connectors 800 and 800', respectively. The cable 700' is similar to the cable 700. Further, The cable connectors 800 and 800' are similar to one another.

The exposed portions of the electrically conductive strands 702b and 702c and the central insulative strand 702a of the cable 700 are inserted into a cavity 802 defined by a first portion 804a of the cable connector 800, and secured to the cable connector 800. As an example, the exposed portion of the electrically conductive strand 702c is secured to a mounting structure 806 and/or a first electrical prong 808a extending out of a second portion 804b of the cable connector 800 (e.g., using solder, adhesive, clamps, or brackets), such that the electrically conductive strand 702c directly contacts the first electrical prong 808a (e.g., along a base portion 810a of the first electrical prong 808a). Similarly, the exposed portion of the electrically conductive strand 702b is secured to the mounting structure 806 and/or a second electrical prong 808b of the cable connector 800 (e.g., using solder, adhesive, clamps, or brackets), such that the electrically conductive strand 704b directly contacts the second electrical prong 808b (e.g., along a base portion 810b of the second electrical prong 808b). Further, the central insulative strand 702a is inserted into a recess 812 defined along a central axis of the mounting structure 806.

The cable connector 800 physically and electrically interconnects with another cable connector similar or substantially identical to the cable connector 800, such that electrical signals transmitted through the cable 700 are transmitted to another electronic device and/or the cable 700 receives electrical signals from another electronic device. For example, as shown in FIG. 8A, the second cable 700' is coupled to a second cable connector 800'. The cable 700' is similar or substantially identical to the cable 700. Further, the cable connector 800' is similar or substantially identical to the cable connector 800. For example, the cable connector 800' provides a physical and electrical interface for the cable, and includes a first portion configured to accept a cable, and a second portion configured to couple with the cable. Further, the first portion defines a cavity for accommodating the cable. Further, the second portion includes a mounting structure and first and second electrical prongs extending from the second portion. Due to the similarity between the cable connectors 800 and 800', for ease of illustration, the components of the cable connector 800' have not been separately labeled with respect to FIG. 8A.

As shown in FIG. 8B, the electrical prong 808a of the cable connector 800 and corresponding electrical prong of the cable connector 800' are configured to physically and electrically couple with one another, such that electrical signals from a conductive strand of one cable is electrically coupled to a corresponding conductive strand of the other cable. Similarly, the electrical prong 808b of the cable connector 800 and the corresponding electrical prong of the cable connector 800' are configured to physically and electrically couple with one another, such that electrical signals from another conductive strand of one cable is electrically coupled to another corresponding conductive strand of the other cable

Further, as shown in FIG. 8B, the electrical prongs are configured to couple to one another according to a hermaphroditic configuration, and are configured to reversibly secure to other another through a friction and/or press fit. For example, a first prong portion 814a of the electrical prong 808a of the first cable connector 800 is inserted between a first prong portion 814a' and a second prong portion 814b' of the electrical prong 808a' of the second cable connector 800'. Further, the second prong portion 814b' of the electrical prong 808a' bends to accept the first prong portion 814a of the electrical prong 808a. Further, a convex portion of a second prong portion 814b' of the electrical prong 808a' presses against the first prong portion 814a of the electrical prong 808a (e.g., due to a spring force or a shape memory of the second prong portion 814b'), such that the electrical prongs 808a and 808a' are held in place through friction.
Similarly, the first prong portion 814a' of the electrical prong 808a' is inserted between the first prong portion 814a and a second prong portion 814b of the electrical prong 808a. Further, the second prong portion 814b of the electrical prong 808a bends to accept the first prong portion 814a of the electrical prong 808a'. Further, a convex portion of the second prong portion 814b presses against the first prong portion 814a' of the electrical prong 808a' (e.g., due to a spring force or a shape memory of the second prong portion 1022a), such that the electrical prongs 808a and 808a' are held in place through friction.

The electrical prong 808b of the cable connector 800 and a corresponding electrical prong of the cable connector 800' are configured to couple to one another according to a similar hermaphroditic configuration.

This hermaphroditic coupling configuration can provide various benefits. For example, the hermaphroditic coupling configuration enables corresponding electrical prongs to directly contact one another at several points between them. This enables the electrical prongs to maintain consistent physical and electrical interconnection, even despite the application of certain external forces (e.g., vibrations). Further, this enables the electrical prongs to be reversibly coupled to one another. For example, the electrical prongs can be inserted into one another (e.g., by pushing the cable connectors together) to provide a physical and electrical interconnection between two cables. Further, the electrical prongs can be separated from one another (e.g., by pulling the cable connectors apart) to reverse the interconnection without damaging the cable connectors.

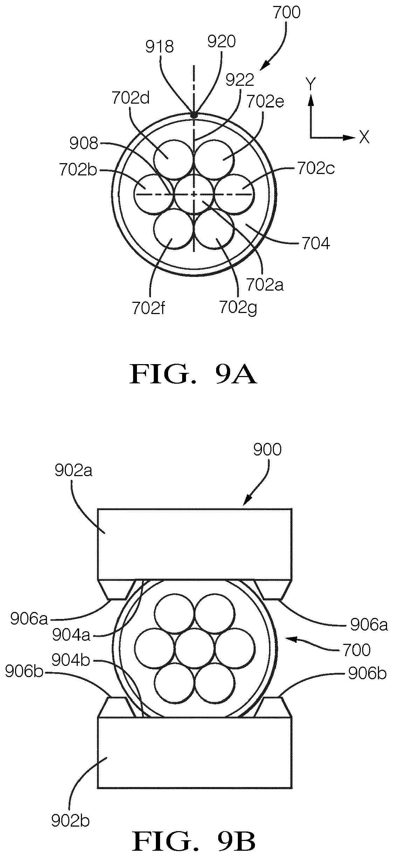

In an embodiment, a cable is stripped (e.g., such that one or more of the strands are exposed) using a stripping tool 900. An example process for stripping a cable 700 using the stripping tool 900 is shown in FIGS. 9A-9D. The process is beneficial, for instance, in preparing the cable 700 for use with a cable connector (e.g., the cable connector 800 show and described with respect to FIGS. 8A and 8B.

FIG. 9A shows the cable 700 according to a cross-sectional view. In a similar manner as shown in FIG. 7B, the cable 700 includes a bundle of strands 702a-702g (e.g., a group, collection of strand secured to one another) and an insulative jacket 704 that encloses the bundle of strands 702a-702g with respect to the cross-section of the cable 700. The bundle of strands 702a-702g are arranged such that adjacent strands of the bundle contact or nearly contact one another along their lengths. The bundle of strands includes a central insulative strand 702a, and two electrically conductive strands 702b and 702c positioned on opposing sides of the central insulative strand 702a with respect to its cross-section. Further, the bundle of strands includes additional insulative strands 702d-702g positioned along the periphery of the central insulative strand 702a with respect to its cross-section.

As shown in FIG. 9B, a stripping tool 900 is positioned around the cable 700 at a position along the length of the cable 700. The stripping tool 900 includes a first portion 902a configured to be positioned on one side of the cable 700, and a second portion 902b configured to be positioned on the opposing side of the cable 700. Although the first portion 902a and the second portion 902b are shown as separate portions, The first portion 902 and the second portion 902b are attached to one another (e.g., through a hinge, articulating joint, or other connector).

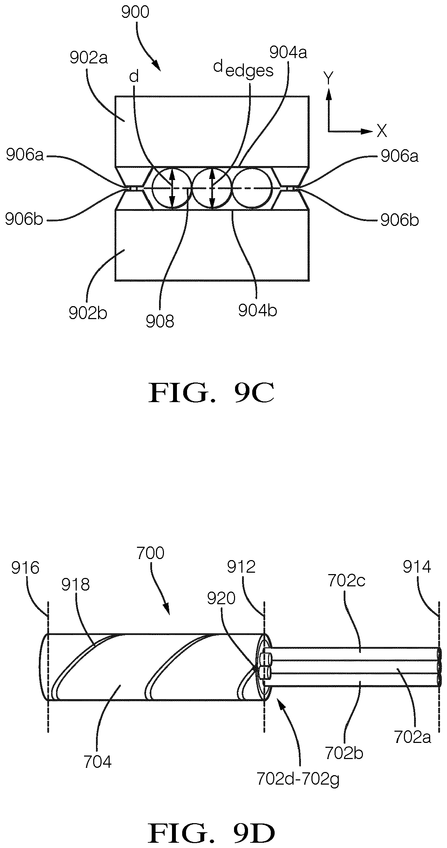

The first portion 902a includes a first cutting edge 904a and first protruding edges 906a extending from the first cutting edge 904a. Similarly, the second portion 902b includes a second cutting edge 904b and second protruding edges 906b extending from the second cutting edge 904b. When the stripping tool 900 is in a closed position (e.g., as shown in FIG. 9C), the first cutting edge 904a and the second cutting edge 904b are parallel to one another and separated by a distance $d_{edges}$. The distance $d_{edges}$ is equal or substantially equal to the diameter $d$ of each of the strands 702a-702c. Further, when the stripping tool 900 is in a closed position, the first protruding edges 906a and the second protruding edges 906b abut one another, or extend past each other.

The stripping tool 900 is used to selectively cut the insulative jacket 704 and the additional insulative strands 702d-702g at a particular position along the length of the cable 700, while not cutting the central insulative strand 702a and the electrically conductive strands 702b and 702c at that position. For example, as shown in FIG. 9C, the stripping tool 900 and the cable 700 are oriented relative to one another such that, at a particular position along the length of the cable 700, the first cutting edge 904a and second cutting edge 904b are parallel to a line 908 extending through the centers of the electrically conductive strands 702b and 702c. When the first portion 902a and the second portion 902b are brought together, the first cutting edge 904a, second cutting edge 904b, first protruding edges 906a, and the second protruding edges 906b selectively cut the insulative jacket 704 and the additional insulative strands 702d-702g at that position, while not cutting the central insulative strand 702a and the electrically conductive strands 702b and 702c at that position (e.g., leaving those strands intact or un-severed at that position).

As shown in FIG. 9D, when the stripping tool 900 is removed from the cable 700 (e.g., by separating the first portion 902a and the second portion 902b from one another and/or pulling the stripping tool 900 away from the cable 700), the central insulative strand 702a and the electrically conductive strands 702b and 702c are exposed from the cutting position 912 to an end 914 of the cable 700. Due to the cut, the insulative jacket 704 and the additional insulative strands 702d-702g do not extend from the cutting position 912 to an end 914 of the cable 700. Further, the cable 700 remains intact from the cutting position 912 to the opposite end 916 of the cable 700.

As described herein, during the stripping process, the stripping tool 900 and the cable 700 are oriented relative to one another such that, at a particular position along the length of the cable 700, (e.g., the cutting positing 912) the first cutting edge 904a and second cutting edge 904b are parallel to the line 908 extending through the centers of the electrically conductive strands 702b and 702c. This orientation enables the cable 700 to be properly stripped, such that insulative jacket 704 and the additional insulative strands 702d-702g are cut at that position, while the central insulative strand 702a and the electrically conductive strands 702b and 702c remain uncut at that position. To facilitate proper positioning of the stripping tool 900 relative to the cable 700, the cable 700 includes one or more visual indexes 918 (e.g., printed features, such as markings, and/or structural features, such as protrusions or channels, defined on the insulative jacket 704) indicating the orientation of the electrically conductive strands 702b and 702c along the length of the cable 700. For example, as shown in FIG. 9D, for electrically conductive strands 702b and 702c that twist along the length of the cable 700, the index 918 indicates a helical path along the insulative jacket 704 that is aligned with the twists of the electrically conductive strands 702b and 702c (e.g., having the same twist rate).

The index 918 indicates the proper orientation of the cable 700 with respect to the stripping tool 900 at cutting points along the length of the cable 700. For instance, referring to FIG. 9A, the index 918 at a particular position on the length of the cable 700 is arranged on the periphery of the insulative jacket 704 at a point 920, where the point 920 is positioned along a line 922 extending from a center of the central insulative strand 702 with respect to its cross-section (e.g., a radius of the cable 700), and where the line 922 extends orthogonal to the line 908 extending through the centers of the electrically conductive strands 702b and 702c. The stripping tool 900 and the cable 700 are oriented such that, at the point 920, the index 918 is aligned along a center of the first cutting edge 904a or the second cutting edge 904b. Accordingly, when the stripping tool 900 is closed around the cable 700, the cable 700 is stripped according to the arrangement shown in FIGS. 9C and 9D.

Although an example index 918 are is and described with respect to FIGS. 9A and 9D, other indicia or markings are also possible to indicating the orientation of the strands of the cable 700.

## Claims

1. A method comprising:

   obtaining a communications cable (700) comprising a bundle of strands (702a-702g), the bundle of strands twisting along the length of the cable and comprising:

an electrically insulative first strand (702a), an electrically conductive second strand (702b) disposed adjacent to the first strand (702a), an electrically conductive third strand (702c) disposed adjacent to the first strand (702a) and opposite the second strand (702b), and one or more additional electrically insulative strands (702d-702g) disposed adjacent to the first strand (702a); the method comprising cutting, at a first position along a length of the communications cable, the one or more additional strands while not cutting first, second, and third strands at the first position by determining an orientation of at least one of the second strand or the third strand at the first position, wherein the orientation is determined based on a visual index (918) on the communications cable, the visual index (918) indicating the orientation of at least one of the second strand or the third strand along a length of the communications cable; and removing, from the communications cable, a portion of the one or more additional strands between the first position and an end of the communications cable.

2. The method of claim 1, wherein cutting the one or more additional strands while not cutting first, second, and third strands at the first position comprises: aligning a first cutting edge of a stripping tool at the first position based on the orientation.

3. The method of claim 2, wherein the first cutting edge (904a) is aligned such that the first cutting edge (904a) is parallel to a line extending through a center of the second strand (702b) and a center of the third strand at the first position.

4. The method of claim 2 or 3, wherein cutting the one or more additional strands while not cutting first, second, and third strands at the first position comprises: cutting at least some of the one or more additional strands using the first cutting edge of the stripping tool.

5. The method of claim 4, wherein cutting the one or more additional strands while not cutting first, second, and third strands at the first position comprises: cutting at least some of the one or more additional strands using a second cutting edge (904b) of the stripping tool, wherein the second cutting edge (904b) is parallel to the first cutting edge (904a).

6. The method of claim 4 or 5, further comprising: cutting an insulative jacket (704) of the communications cable at the first position.

7. The method of claim 6, wherein cutting the insulative jacket (704) of the communications cable comprises: cutting at least a portion of the insulative jacket (704) using one or more first protruding edges of the stripping tool, the one or more first protruding edges (906a) protruding from the first edge of the cutting tool.

8. The method of claim 7, wherein cutting the insulative jacket (704) of the communications cable comprises: cutting at least a portion of the insulative jacket (704) using one or more second protruding edges of the stripping tool, the one or more second protruding edges (906b) protruding from the second edge of the cutting tool.

9. The method of any of claims 1 to 8, wherein the one or more additional strands are cut substantially concurrently with one another, wherein the insulative jacket (704) is in particular cut substantially concurrently with the one or more additional strands.

10. The method of any of claims 1 to 9, further comprising inserting at least one of an exposed portion of the second strand or an exposed portion of the third strand into an electrical connector.

11. The method of claim 10, further comprising inserting an exposed portion of the first strand into the electrical connector.

12. The method of claim 10 or 11, further comprising: installing the communications cable and the electrical connector in a communications system of an autonomous vehicle.

**Patentansprüche**

1. Verfahren, umfassend:
Erhalten eines Kommunikationskabels (700), das ein Bündel von Litzen (702a - 702g) umfasst, wobei das Bündel von Litzen entlang der Länge des Kabels verdrillt ist und umfasst:

eine elektrisch isolierende erste Litze (702a), eine elektrisch leitende zweite Litze (702b), die benachbart der ersten Litze (702a) angeordnet ist, eine elektrisch leitende dritte Litze (702c), die benachbart der ersten Litze (702a) und gegenüber der zweiten Litze (702b) angeordnet ist, und eine oder mehrere zusätzliche elektrisch isolierende Litzen (702d - 702g), die benachbart der ersten Litze (702a) angeordnet sind; wobei das Verfahren umfasst:

Schneiden der einen oder mehreren zusätzlichen Litzen an einer ersten Position entlang einer Länge des Kommunikationskabels, während die erste, zweite und dritte Litze an der ersten Position nicht geschnitten werden, indem eine Orientierung der zweiten Litze und/oder der dritten Litze an der ersten Position bestimmt wird, wobei die Orientierung basierend auf einem visuellen Index (918) auf dem Kommunikationskabel bestimmt wird, wobei der visuelle Index (918) die Orientierung der zweiten Litze und/oder der dritten Litze entlang einer Länge des Kommunikationskabels anzeigt; und Entfernen eines Abschnitts der einen oder mehreren zusätzlichen Litzen von dem Kommunikationskabel zwischen der ersten Position und einem Ende des Kommunikationskabels.

2. Verfahren nach Anspruch 1, wobei das Schneiden der einen oder der mehreren zusätzlichen Litzen, während die erste, zweite und dritte Litze an der ersten Position nicht geschnitten wird, umfasst: Ausrichten einer ersten Schneidkante eines Abisolierwerkzeugs an der ersten Position auf der Grundlage der Orientierung.

3. Verfahren nach Anspruch 2, wobei die erste Schneidkante (904a) so ausgerichtet ist, dass die erste Schneidkante (904a) parallel zu einer Linie verläuft, die sich durch eine Mitte der zweiten Litze (702b) und eine Mitte der dritten Litze an der ersten Position erstreckt.

4. Verfahren nach einem der Ansprüche 2 oder 3, wobei das Schneiden der einen oder mehreren zusätzlichen Litzen, während die erste, zweite und dritte Litze an der ersten Position nicht geschnitten werden, umfasst: Schneiden mindestens einiger der einen oder mehreren zusätzlichen Litzen unter Verwendung der ersten Schneidkante des Abisolierwerkzeugs.

5. Verfahren nach Anspruch 4, wobei das Schneiden der einen oder mehreren zusätzlichen Litzen, während die erste, zweite und dritte Litze an der ersten Position nicht geschnitten werden, umfasst: Schneiden mindestens einiger der einen oder mehreren zusätzlichen Litzen unter Verwendung einer zweiten Schneidkante (904b) des Abisolierwerkzeugs, wobei die zweite Schneidkante (904b) parallel zur ersten Schneidkante (904a) verläuft).

6. Verfahren nach einem der Ansprüche 4 oder 5, ferner umfassend: Schneiden eines isolierenden Mantels (704) des Kommunikationskabels an der ersten Position.

7. Verfahren nach Anspruch 6, wobei das Schneiden des isolierenden Mantels (704) des Kommunikationskabels umfasst: Schneiden mindestens eines Abschnitts des isolierenden Mantels (704) unter Verwendung einer oder mehrerer erster vorstehender Kanten des Abisolierwerkzeugs, wobei die eine oder mehreren ersten vorstehenden Kanten (906a) von der ersten Kante des Schneidwerkzeugs vorstehen.

8. Verfahren nach Anspruch 7, wobei das Schneiden des isolierenden Mantels (704) des Kommunikationskabels umfasst: Schneiden mindestens eines Abschnitts des isolierenden Mantels (704) unter Verwendung einer oder mehrerer zweiter vorstehender Kanten des Abisolierwerkzeugs, wobei die eine oder mehreren zweiten vorstehenden Kanten (906b) von der zweiten Kante des Schneidwerkzeugs vorstehen.

9. Verfahren nach einem der Ansprüche 1 bis 8, wobei die eine oder die mehreren zusätzlichen Litzen im Wesentlichen gleichzeitig geschnitten werden, wobei der isolierende Mantel (704) insbesondere im Wesentlichen gleichzeitig mit der einen oder den mehreren zusätzlichen Litzen geschnitten wird.

10. Verfahren nach einem der Ansprüche 1 bis 9, ferner umfassend ein Einführen mindestens eines freiliegenden Abschnitts der zweiten Litze oder eines freiliegenden Abschnitts der dritten Litze in einen elektrischen Verbinder.

11. Verfahren nach Anspruch 10, ferner umfassend ein Einführen eines freiliegenden Abschnitts der ersten Litze in den elektrischen Verbinder umfasst.

12. Verfahren nach Anspruch 10, ferner umfassend: Installieren des Kommunikationskabels und des elektrischen Verbinders in einem Kommunikationssystem eines autonomen Fahrzeugs.

**Revendications**

1. Procédé consistant à :
obtenir un câble de communication (700) comprenant un faisceau de brins (702a-702g), le faisceau de brins étant torsadé le long de la longueur du câble et comprenant :

un premier brin électriquement isolant (702a),
un deuxième brin électriquement conducteur (702b) disposé de manière adjacente au premier brin (702a),
un troisième brin électriquement conducteur (702c) disposé de manière adjacente au premier brin (702a) et opposée au deuxième brin (702b), et
un ou plusieurs brins électriquement isolants supplémentaires (702d-702g) disposés de manière adjacente au premier brin (702a) ;
le procédé comprenant les étapes consistant à :

couper, à une première position le long d'une longueur du câble de communication, lesdits un ou plusieurs brins supplémentaires tout en ne coupant pas les premier, deuxième et troisième brins à la première position en déterminant une orientation d'au moins l'un du deuxième brin ou du troisième brin à la première position, dans lequel l'orientation est déterminée sur la base d'un indice visuel (918) sur le câble de communication, l'indice visuel (918) indiquant l'orientation d'au moins l'un du deuxième brin ou du troisième brin le long d'une longueur du câble de communication ; et
retirer, du câble de communication, une partie desdits un ou plusieurs brins supplémentaires entre la première position et une extrémité du câble de communication.

2. Procédé selon la revendication 1, dans lequel l'étape consistant à couper lesdits un ou plusieurs brins supplémentaires tout en ne coupant pas les premier, deuxième et troisième brins à la première position comprend l'opération consistant à :
aligner un premier bord de coupe d'un outil de dénudage à la première position sur la base de l'orientation.

3. Procédé selon la revendication 2, dans lequel le premier bord de coupe (904a) est aligné de telle sorte que le premier bord de coupe (904a) soit parallèle à une ligne s'étendant à travers un centre du deuxième brin (702b) et un centre du troisième brin à la première position.

4. Procédé selon la revendication 2 ou 3, dans lequel l'étape consistant à couper lesdits un ou plusieurs brins supplémentaires tout en ne coupant pas les premier, deuxième et troisième brins à la première position comprend l'opération consistant à :
couper au moins certains desdits un ou plusieurs brins supplémentaires en utilisant le premier bord de coupe de l'outil de dénudage.

5. Procédé selon la revendication 4, dans lequel l'étape consistant à couper lesdits un ou plusieurs brins supplémentaires tout en ne coupant pas les premier, deuxième et troisième brins à la première position comprend l'opération consistant à :
couper au moins certains desdits un ou plusieurs brins supplémentaires en utilisant un second bord de coupe (904b) de l'outil de dénudage, dans lequel le second bord de coupe (904b) est parallèle au premier bord de coupe (904a).

6. Procédé selon la revendication 4 ou 5, comprenant en outre l'étape consistant à :
couper une gaine isolante (704) du câble de communication à la première position.

7. Procédé selon la revendication 6, dans lequel l'étape consistant à couper la gaine isolante (704) du câble de communication comprend l'opération consistant à :
couper au moins une partie de la gaine isolante (704) en utilisant un ou plusieurs premiers bords saillants de l'outil de dénudage, lesdits un ou plusieurs premiers bords saillants (906a) faisant saillie du premier bord de l'outil de coupe.

8. Procédé selon la revendication 7, dans lequel l'étape consistant à couper la gaine isolante (704) du câble de communication comprend l'opération consistant à :
couper au moins une partie de la gaine isolante (704) en utilisant un ou plusieurs seconds bords saillants de l'outil de dénudage, lesdits un ou plusieurs seconds bords saillants (906b) faisant saillie du second bord de l'outil de coupe.

9. Procédé selon l'une quelconque des revendications 1 à 8, dans lequel lesdits un ou plusieurs brins supplémentaires sont coupés sensiblement concurremment les uns avec les autres, dans lequel la gaine isolante (704) est en particulier coupée sensiblement concurremment avec lesdits un ou plusieurs brins supplémentaires.

10. Procédé selon l'une quelconque des revendications 1 à 9, comprenant en outre l'étape consistant à insérer au moins une partie exposée du deuxième brin ou une partie exposée du troisième brin dans un connecteur électrique.

11. Procédé selon la revendication 10, comprenant en outre l'étape consistant à insérer une partie exposée du premier brin dans le connecteur électrique.

12. Procédé selon la revendication 10 ou 11, comprenant en outre l'étape consistant à :
installer le câble de communication et le connecteur électrique dans un système de communication d'un véhicule autonome.

**FIG. 1**

FIG. 2

EP 3 745 425 B1

**FIG. 3**

402a LiDAR
402b RADAR
402d TLD
402c CAMERA

INPUTS

OUTPUTS

404a
404b
404d
404c

FIG. 4

EP 3 745 425 B1

FIG. 5

**FIG. 6**

EP 3 745 425 B1

FIG. 7A

FIG. 7B

EP 3 745 425 B1

FIG. 8A

FIG. 8B

EP 3 745 425 B1

FIG. 9A

FIG. 9B

FIG. 9C

FIG. 9D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008128151 A1
- DE 4025380 C1

- CN 102723135 A1